# EUROPEAN PATENT APPLICATION

(11) **EP 4 748 608 A1**
(43) Date of publication of application: **27.05.2026**
(21) Application number: 25216825.7
(22) Date of filing: 19.11.2025
(51) Int. Cl.: B60K 35/10, H01H 9/18, H01H 13/02, H01H 13/83

(54) **VEHICLE SWITCH DEVICE**

(30) Priority: 22.11.2024 JP 2024204170
(71) Applicant: Suzuki Motor Corporation, Shizuoka 432-8611 (JP); Asahi Corporation, Annaka-shi, Gumma 379-0133 (JP)
(72) Inventor: TOKUNAGA, Akira, HAMAMATSU-SHI, 432-8611 (JP); TAKESHITA, Maki, HAMAMATSU-SHI, 432-8611 (JP); KAYAMA, Yuichi, ANNAKA-SHI, 379-0133 (JP); MAEMINE, Kenj, ANNAKA-SHI, 379-0133 (JP)
(74) Representative: Plasseraud IP

(57) **Abstract**

A vehicle switch device 1 includes: a surface member 3 having optical transparency and elasticity; at least one push-type switch 29 that includes a button member 31 having light-transparency and can operate the button member 31 from a front side of the surface member 3, the button member 31 being disposed on a back side of the surface member 3 and being covered with and hidden by the surface member 3; and at least one light source 9 that indicates an operating position of the at least one switch 29 by emitting light from the back side of the button member 31 and displaying a predetermined design on the surface member 3 in an energized state and causes the surface member 5 to hide the operating position by stopping light emission in an de-energized state; and a main body 15 accommodating the at least one switch 29 and the at least one light source 9. The at least one switch 29 is covered with the surface member 3 without visibly appearing from the front side of the surface member 3.

## Description

### BACKGROUND OF THE INVENTION

### Field of the Invention

Embodiments of the present invention relate to a vehicle switch device.

### Description of the Related Art

A known switch for an electrical instrument is intended to have practical utility and to provide a high illumination effect. Such a switch for an electrical instrument includes: a switch plate that is made of a transparent or semi-transparent body and constitutes an outer frame; a light source that radiates light to the inner peripheral surface of the switch plate toward the outer peripheral side of the switch plate; an operating switch that is installed in an accommodation portion inside the frame of the switch plate and turns on and off the electrical instrument; and a sheet material that covers the operating switch and the light source. The operating switch visibly appears in the outer peripheral side of the switch plate while being covered with the sheet material.

[Patent Document 1] JP 2005-353491 A

A vehicle includes various in-vehicle devices such as an audio device, a car navigation system, an air conditioner, an electric seat adjuster, an electric window adjuster, and an electric door-mirror adjuster. In the vehicle interior, many switches for operating these in-vehicle devices are disposed. When too many switches are disposed, a vehicle occupant feels complicated and designability of the vehicle interior is impaired. For this reason, it is preferred that the switches for operating the in-vehicle devices be superior not only in functionality but also in designability.

### SUMMARY OF THE INVENTION

In view of the above-described circumstances, an object of the present invention is to provide a vehicle switch device that has not only excellent functionality as a switch but also excellent designability in a vehicle.

To solve the above problems, a vehicle switch device includes: a surface member that is colored and/or patterned and has elasticity and optical transparency from a back side to a front side, the front side being exposed to a vehicle interior, the back side being unexposed to the vehicle interior; at least one push-type switch that includes a button member having light-transparency and can operate the button member from the front side of the surface member, the button member being disposed on the back side of the surface member and being covered with and hidden by the surface member; and at least one light source that indicates an operating position of the at least one switch by emitting light from the back side of the button member and displaying a predetermined design on the surface member in an energized state and causes the surface member to hide the operating position by stopping light emission in a de-energized state; and a main body that accommodates at least part of each of the at least one switch and the at least one light source. The at least one switch is covered with the surface member without visibly appearing from the front side of the surface member.

### EFFECTS OF THE INVENTION

The present invention can provide a vehicle switch device that is excellent in terms of both functionality as a switch and designability in a vehicle.

### BRIEF DESCRIPTION OF THE DRAWINGS

In the accompanying drawings:
Fig. 1 is an exploded perspective view of a vehicle switch device according to one embodiment of the present invention;
Fig. 2 is an enlarged top view of a region P surrounded by a one-dot chain line in Fig. 1;
Fig. 3 is a cross-sectional view of the vehicle switch device according to the embodiment of the present invention;
Fig. 4 is a schematic diagram illustrating part of a front side of a surface member when electricity is applied in the vehicle switch device according to the embodiment of the present invention;
Fig. 5 is a schematic diagram illustrating part of the front side of the surface member when electricity is not applied in the vehicle switch device according to the embodiment of the present invention;
Fig. 6 is a schematic diagram illustrating positional relationship between a first switch, a main body, and the surface member in the vehicle switch device according to the embodiment of the present invention;
Fig. 7 is a schematic diagram illustrating a first aspect of positional relationship between the first switch, a second switch, and the surface member in the vehicle switch device according to the embodiment of the present invention;
Fig. 8 is a schematic diagram illustrating a second aspect of positional relationship between the first switches, the second switch, and the surface member in the vehicle switch device according to the embodiment of the present invention;
Fig. 9 is a schematic diagram illustrating a third aspect of positional relationship between the first switches, the second switch, and the surface member in the vehicle switch device according to the embodiment of the present invention; and
Fig. 10 is a schematic diagram illustrating another aspect of positional relationship between the first switch, the main body, and the surface member in the vehicle switch device according to the embodiment of the present invention.

### DETAILED DESCRIPTION

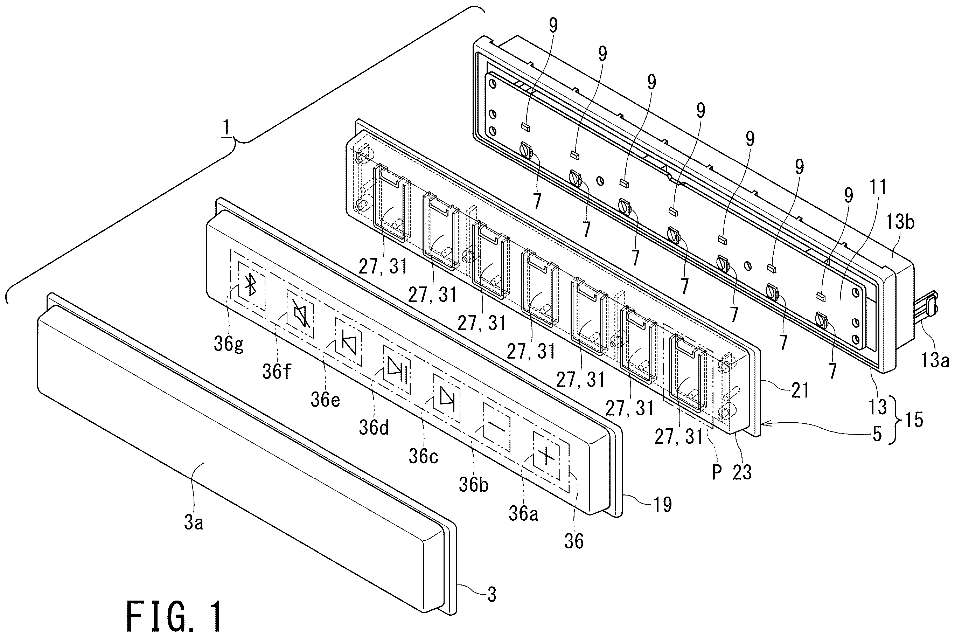

Hereinbelow, a vehicle switch device according to the present embodiment will be described by referring to Fig. 1 to Fig. 10. The same reference signs are given to identical or equivalent components in each figure.

Fig. 1 is an exploded perspective view of a vehicle switch device according to one embodiment of the present invention.

The vehicle switch device 1 according to the present embodiment shown in Fig. 1 is a device provided with a switch to be used in the vehicle interior. In the present embodiment, the upper and lower sides of the vehicle switch device 1 are defined below with reference to the state in which the vehicle switch device 1 is installed in the vehicle interior. The side where at least part of the vehicle switch device 1 is exposed inside the vehicle interior is defined as the upper side, and its opposite side where the vehicle switch device 1 is not exposed in the vehicle interior is defined as the lower side.

In the present embodiment, the direction of moving away from or approaching at least part of the vehicle switch device 1 exposed in the vehicle interior is defined as an up- and-down direction of the vehicle switch device 1.

In the present embodiment, the terms "front side" and "back side" are determined with reference to the state in which the vehicle switch device 1 is installed in the vehicle interior. That is, the side facing the vehicle interior is defined as the front side, and the side opposite to this front side is defined as the back side. In the following description, the vehicle switch device 1 is sometimes abbreviated as the switch device 1.

As shown in Fig. 1, the switch device 1 includes a surface member 3, a resin member 5, a plurality of switch elements 7, a plurality of light sources 9, a substrate 11, and a casing 13, for example. The switch elements 7 and the light sources 9 are disposed on the substrate 11. The resin member 5 and the casing 13 are integrated as a main body 15 of the switch device 1. It is preferred that the switch device 1 include a back member 19 between the surface member 3 and the resin member 5. The number of the switch elements 7 may be one, and the number of the light sources 9 may be one.

The front side of the surface member 3 is exposed to the vehicle interior, and the back side of the surface member 3 is not exposed to the vehicle interior. The surface member 3 has optical transparency from the back side to the front side and is elastic. The surface member 3 is colored and/or patterned. It is sufficient that the color and pattern of the surface member 3 be applied to the front side of the surface member 3.

In general, the color and pattern of the surface member 3 may match the color and pattern of the vehicle interior in which the switch device 1 is disposed. The shape of the surface member 3 is roughly similar to that of the resin member 5. The surface member 3 is located on the upper side of the switch device 1. The surface 3a of the surface member 3 is included in the front side of the surface member 3, is also the upper surface, and is exposed to the vehicle interior when the switch device 1 is installed in the vehicle interior.

In the following description, unless otherwise specified, the front side and the back side of every component of the switch device 1 will be described in accordance with the front and back sides of the surface member 3.

As long as the surface member 3 has both optical transparency and elasticity and can be colored and/or patterned without impairing characteristics of the switch device 1, the material of the surface member 3 is not limited to a specific material. For example, the material of the surface member 3 is preferably at least one of the following: a resin sheet material, fabric, genuine leather, and artificial leather. In other words, the material of the surface member 3 may be a single material such as a resin sheet material, fabric, genuine leather, and artificial leather or may be a combination of these single materials. Although it depends on the thickness, the processing method, and/or the treatment method, the surface member 3 can have desired light transparency and desired elasticity by being made of the above-described material(s). Moreover, these materials satisfactorily blend with the decoration of the vehicle interior, and thus can be suitably applied to the surface member 3. Furthermore, in terms of availability and workability, it is more preferred that the material of the surface member 3 be fabric.

The resin member 5 is disposed on the back side of the surface member 3 and supports at least part of the surface member 3. The material of the resin member 5 is, for example, polycarbonate resin, ABS resin, acrylic resin, or polyester resin. At least part of the resin member 5 has optical transparency and passes the light radiated from the light sources 9 through itself. Not limited to such a configuration, when the switch device 1 includes the back member 19, the entire resin member 5 may be a transparent resin member that is capable of transmitting light. The resin member 5 includes: a bottom portion 21 that faces the casing 13; and a protruding portion 23 that has a substantially rectangular parallelepiped shape and protrudes from the bottom portion 21 toward the surface member 3.

The bottom portion 21 is fitted into the casing 13. In this manner, the casing 13 is integrated with the resin member 5 so as to constitute the main body 15. The resin member 5 is an upper member of the main body 15.

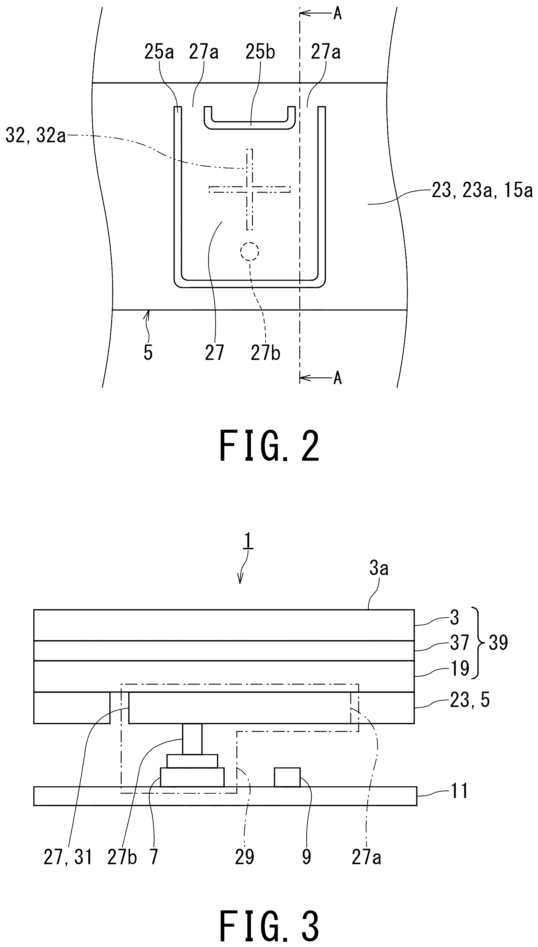

Fig. 2 is an enlarged top view of the region P surrounded by the one-dot chain line in Fig. 1.

As shown in Fig. 1 and Fig. 2, the protruding portion 23 includes: a surface 23a; a U-shaped first slit 25a provided on the surface 23a; a U-shaped second slit 25b that is provided on the surface 23a and is smaller than the first slit 25a; and a cantilever plate portion 27 that is surrounded by the first slit 25a and the second slit 25b and has two fixed ends 27a. The surface 23a is the upper surface. The surface 23a is also the surface 15a of the main body 15.

In the illustrated aspect of Fig. 1, the surface 23a of the protruding portion 23 is a plane. Not limited to such an aspect, from the viewpoint of designability in the vehicle interior, the surface 23a of the protruding portion 23 can be appropriately changed in shape in accordance with either or both of the use of the switch device 1 and the shape of the interior surroundings in which the switch device 1 is disposed in the vehicle interior. For example, when the shape of the interior surroundings in which the switch device 1 is disposed has a curved surface, the surface 23a may be a curved surface. In this case, the surface 3a of the surface member 3 can also be a similarly curved surface.

Although the number of the plate portions 27 can be determined depending on the purpose and use of the switch device 1, the number of the plate portions 27 is usually the same as the number of the switch elements 7. In other words, the number of the plate portion(s) 27 is at least one or more. In the aspect of Fig. 1, the protruding portions 23 includes plural plate portions 27, for example, seven plate portions 27. Furthermore, in the aspect of Fig. 1, the seven plate portions 27 are disposed to be spaced apart in the longitudinal direction of the surface 23a of the protruding portions 23. Each plate portion 27 has a column-shaped protrusion 27b, which is provided on the back side of each plate portion 27 and is for contacting the switch element 7.

Each switch element 7 is a push-type switch that can be pressed in. Specifically, each switch element 7 is an alternate-type or momentary-type switch. The number of switch elements 7 is usually the same as the number of the plate portions 27 of the resin member 5.

When the vehicle occupant such as a driver and a passenger presses the plate portion 27 of the resin member 5 from the front side of the surface member 3, the tip of the protrusion 27b of the plate portion 27 is brought into contact with the surface of the switch element 7. At this time, when the switch element 7 is an alternate type switch, the switch element 7 is turned into the on-state or off-state. This operation of the switch element 7 is called alternate operation.

When the switch element 7 is a momentary switch, the switch element 7 is in the on-state only in the period during which the tip of the protrusion 27b is in contact with the surface of the switch element 7. This operation of the switch element 7 is called momentary operation.

Fig. 3 is a cross-sectional view of the vehicle switch device according to the embodiment of the present invention. Fig. 3 is a simplified cross-sectional view for illustrating the switch device 1 that is cut vertically along the line A-A in Fig. 2. For convenience of explanation, the casing 13 is omitted in Fig. 3.

As shown in Fig. 1 to Fig. 3, in the present embodiment, each plate portion 27 and the corresponding switch element 7 constitute one switch 29. The number of switches 29 is the same as the number of the plate portions 27 and the switch elements 7. In other words, the number of switches 29 is at least one. Each plate portion 27 is a button member 31 included in the switch 29. In other words, the switch device 1 has at least one push-type switch 29, and each switch 29 has a light-transparent button member 31 that can be operated from the front side of the surface member 3. Each button member 31 is disposed on the back side of the surface member 3 and is covered with and hidden by the surface member 3. The button member 31 includes the surface (i.e., upper surface) of the switch 29.

Each switch 29 does not necessarily have to include the plate portion 27 as the button member 31. As long as each switch 29 can receive a pressing operation from the front side of the surface member 3, instead of the plate portion 27, each switch 29 may have a button member 31 different from the plate portion 27. In this case, the resin member 5 has, for example, a through hole in the region where the plate portion 27 is to be provided, instead of the plate portion 27. Each switch 29 may be configured such that at least part of the button member 31 being different from the plate portion 27 is disposed in this through hole.

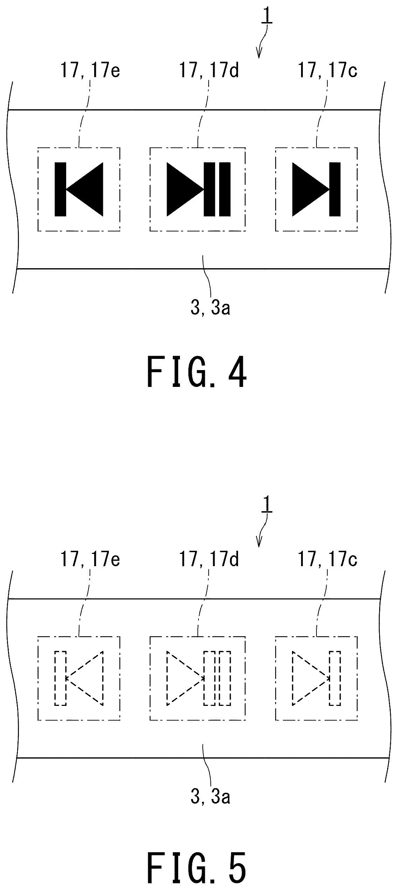

Fig. 4 is a schematic diagram illustrating part of the front side of the surface member when electricity is applied in the vehicle switch device according to the embodiment of the present invention. In Fig. 4, the black-colored portions of the predetermined designs 17 (17c, 17d, 17e) show a state of being illuminated by light emitted from the light sources 9.

Fig. 5 is a schematic diagram illustrating part of the front side of the surface member when electricity is not applied in the vehicle switch device according to the embodiment of the present invention. In Fig. 5, the predetermined designs 17 (17c, 17d, 17e), which are not actually displayed on the surface 3a of the front side of the surface member 3, are shown by dashed lines.

As shown in Fig. 4 and Fig. 5, when being energized, the light sources 9 emit light from the back sides of the button members 31 so as to cause the predetermined designs 17 (17c, 17d, 17e) to be displayed on the surface 3a of the front side of the surface member 3 and thereby indicate the operating positions of the respective switches 29. When being de-energized, the light sources 9 do not emit light and thereby cause the surface 3a of the front side of the surface member 3 to hide the operating positions of the respective switches 29.

In other words, the light sources 9 switch indication/hiding of the operating positions of the respective switches 29 depending on whether the light sources 9 are in an energized state or in a de-energized state. The energized state is a state in which the light sources 9 indicate the operating positions of the respective switches 29 by emitting light from the back sides of the button members 31 and displaying the predetermined designs 17 on the surface member 3. The de-energized state is a state in which the light sources 9 cause the surface member 3 to hide the operating positions of the respective switches 29 by stopping light emission.

In the present embodiment, the predetermined designs 17 include, for example, at least one of letters, numbers, symbols, and illustrations indicative of a function or role of each of the switches 29. The illustrations may also include graphics.

The light sources 9 are provided on the substrate 11 so as to face the button members 31, each of which is the plate portion 27 of the resin member 5, or so as to face the button members 31 different from the plate portions 27. The light sources 9 are, for example, LEDs (Light Emitting Diodes). Each light source 9 may include a focusing lens for focusing light onto the button member 31. The number of light sources 9 is the same as the number of the plate portions 27 and is also the same as the number of the switch elements 7. Not limited to such a configuration, the switch device 1 may be configured such that a single light source 9 radiates light to each of the plate portions 27, for example, via a light guide plate or a light guide rod.

When the switch device 1 does not include the back member 19, the light sources 9 display the predetermined designs 17 on the front side of the surface member 3 in the following manner. Specifically, referring back to Fig. 2, each plate portion 27 includes: a transparent portion 32 that conforms to the shape of the predetermined designs 17; and a light-shielding portion, color of which blocks light (e.g., black), for example. In other words, at least part of each plate portion 27 is optically transparent. In the aspect of Fig. 2, the transparent portion 32 includes a transparent portion 32a, which has the shape of a plus sign. The transparent portions 32 of the respective plate portions 27 transmit light emitted from the light source 9 and thereby displays the predetermined designs 17 on the front side of the surface member 3. Such plate portions 27 can be realized by, for example, painting the plate portions 27 and the entire resin member 5 other than the plate portions 27 in a light-blocking color in the state where masking is performed in accordance with the shape of the predetermined designs 17. When the switch device 1 does not include the back member 19 and each of the switches 29 has the button member 31 different from the plate portion 27, each transparent portion 32 can be provided on the surface of the button member 31 different from the plate portion 27.

As shown in Fig. 1, the casing 13 and the resin member 5 constitute the main body 15. The casing 13 constitutes the lower part of the main body 15. The casing 13 may have a hook portion 13a and a fitting margin 13b in order to be mounted to a predetermined housing and/or the disposition location of the switch device 1 in the vehicle interior. In general, the casing 13 is not exposed in the vehicle interior when the switch device 1 is installed in the vehicle interior. In other words, the casing 13 is located below the switch device 1.

The main body 15 is composed of an upper side located near the button member 31 and a lower side located far from the button member 31, and this upper side accommodates at least part of each of the switches 29, the light sources 9, and the substrate 11. The upper side of the main body 15 is the resin member 5, and the lower side of the main body 15 is the casing 13. In other words, the main body 15 is an assembly of a plurality of components. Not limited to such a configuration, the main body 15 may be a one-piece molded product. The surface 15a of the main body 15 is the upper surface. The surface 15a of the main body 15 includes the surface 23a of the resin member 5.

As described above, in the case where many switches are disposed in the vehicle interior, the vehicle occupant feels complicated when seeing many switches, and this impairs designability of the vehicle interior.

In view of such designability, in the switch device 1 as shown in Fig. 4 and Fig. 5, each switch 29 is covered with the surface member 3 without visibly appearing from the surface member 3 regardless of whether the switches 29 are energized or not.

Specifically, in the energized state of the light sources 9, the predetermined designs 17 are displayed on the front side of the surface member 3 so as to indicate the operating positions of the respective switches 29, and thereby, the vehicle occupant can grasp the positions of the respective switches 29. In other words, the vehicle occupant can press in the switches 29 at an appropriate time. Since the surface member 3 has elasticity, the vehicle occupant can easily press in the switches 29 without being hindered by the surface member 3. Thus, each switch 29 can have excellent functionality as a switch.

In the de-energized state of the light sources 9, the switches 29 are hidden in the back side of the surface member 3, and thus, the vehicle occupant cannot recognize the size, shape, or position of every switch 29. Consequently, at least one of the color and pattern of the surface member 3 is visible to the vehicle occupant, and this effect improves designability of the vehicle interior.

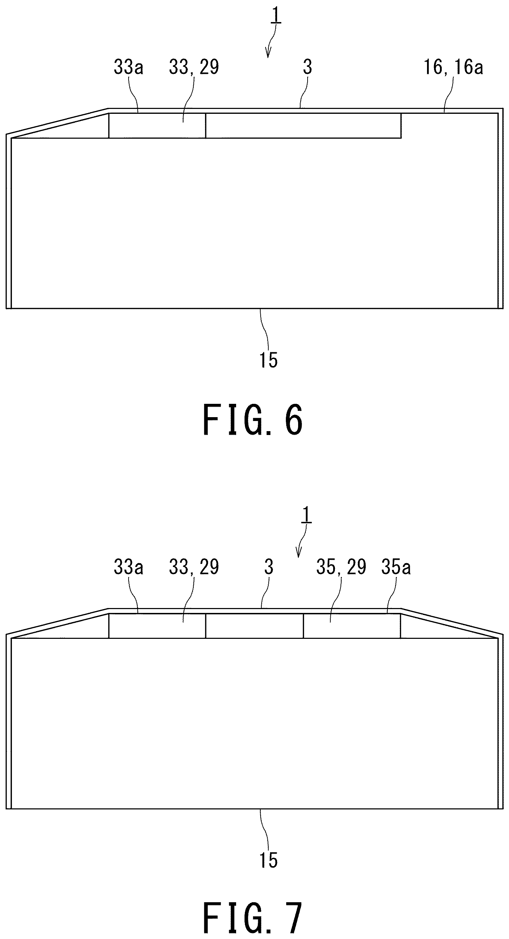

Fig. 6 is a schematic diagram illustrating positional relationship between a first switch, the main body, and the surface member in the vehicle switch device according to the embodiment of the present invention.

For convenience of explanation in Fig. 6, the surface member 3 at the front of the sheet of Fig. 6 is omitted. The same applies to Fig. 7 to Fig. 10 described below. In Fig. 6, it is assumed that the number of the switch 29 is one and the button member 31 is a separate and distinct member from the plate portion 27. In Fig. 6, it is assumed that the first switch 33 is in the off-state before being pressed in.

As shown in Fig. 6, it is preferred that the switch 29 include the first switch 33 having the surface 33a located highest of the switch 29. It is also preferred that the surface member 33a satisfy the following condition.

Specifically, in the off-state before the first switch 33 is pressed in, the surface member 3 continuously covers both the surface 33a of the first switch 33 and a surface 16a of a first portion 16 and is maintained at a height equal to or higher than the surface 33a of the first switch 33 between the first switch 33 and the first portion 16, wherein the first portion 16 is a portion of the main body 15 and is located at a height equal to or higher than the surface 33a of the first switch 33. Such a configuration prevents a state where the first switch 33 visibly appear in the front side of the surface member 3, which may occur when the surface member 3 is between the first switch 33 and the first portion 16 of the main body 15 and is located below the surface 33a of the first switch 33, for example.

The first switch 33 having the surface 33a located highest of the switch 29 is determined with reference to the off-state before the switch 29 is pressed in. When the number of the first switches 33 is two or more, it is assumed that the height of the surface 33a of each of the plurality of first switches 33 is the same.

Fig. 7 is a schematic diagram illustrating a first aspect of positional relationship between the first switch, a second switch, and the surface member in the vehicle switch device according to the embodiment of the present invention.

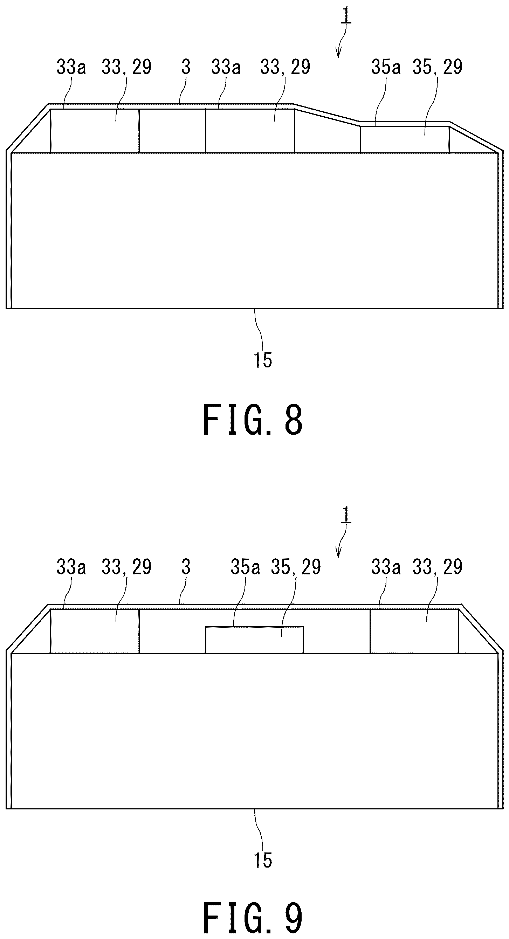

Fig. 8 is a schematic diagram illustrating a second aspect of positional relationship between the first switches, the second switch, and the surface member in the vehicle switch device according to the embodiment of the present invention.

Fig. 9 is a schematic diagram illustrating a third aspect of positional relationship between the first switches, the second switch, and the surface member in the vehicle switch device according to the embodiment of the present invention.

In Fig. 7, it is assumed that the number of the switches 29 is two in total including one first switch 33 and one second switch 35. In Fig. 8 and Fig. 9, it is assumed that the number of the switches 29 is three in total including two first switches 33 and one second switch 35 In Fig. 7 to Fig. 9, it is assumed that: each first switch 33 and each second switch 35 are in the off-state before being pressed in; and the button member 31 is a separate and distinct member from the plate portion 27.

As shown in Fig. 7 to Fig. 9, the switches 29 preferably include: at least one first switch 33 having the surface 33a located highest of the switches 29; and at least one second switch 35 that has a surface 35a located at a height equal to or lower than the surface 33a of at least one first switch 33 and is different from at least one first switch 33. It is also preferred that the surface member 3 satisfy the following condition.

Specifically, in the off-state of both the first switch 33 and the second switch 35, the surface member 3 continuously covers the first and second switches 33 and 35 and is maintained at a height equal to or higher than the surface 35a of the second switch 35 between the first and second switches 33 and 35. Such a configuration prevents a state where the first and second switches 33 and 35 visibly appear in the front side of the surface member 3, which may occur when the surface member 3 is between the first and second switches 33 and 35 and is located below the surface 35a, for example.

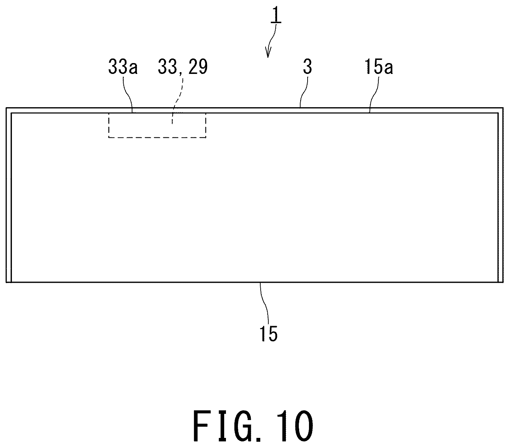

Fig. 10 is a schematic diagram illustrating another aspect of positional relationship between the first switch, the main body, and the surface member in the vehicle switch device according to the embodiment of the present invention.

In Fig. 10, it is assumed that: the number of the switch 29 is one including the first switch 33; and the first switch 33 is in the off-state before being pressed in.

As shown in Fig. 10, it is preferred that the switch 29 include the first switch 33 having the surface 33a located highest of the switch 29. It is also preferred that the first switch 33 and the surface member 3 satisfy the following first and second conditions.

As the first condition, the first switch 33 is located at a height equal to or lower than the surface 15a of the main body 15 in the off-state before the first switch 33 is pressed in. As the second condition, during the off-state of the first switch 33, the surface member 3 continuously covers the surface 33a of the first switch 33 and the surface 15a of the main body 15 at the height of the surface 15a of the main body 15.

When the surface member 3 is located at the height of the surface 15a of the main body 15, the surface 3a of the surface member 3 can be substantially regarded as the surface 15a of the main body 15. Hence, for example, when the first switch 33 is located below the surface 15a while the surface member 3 uniformly covers the surface 15a of the main body 15, the surface member 3 does not generate a dent in the vicinity of the first switch 33, and thus, suppresses deterioration of designability ascribable to generation of the unnecessary dent.

Each switch 29 is preferably an electrical equipment switch to be used when the power source is in the on-state, and it is preferred that each light source 9 is energized when the power source is in the on-state. When each switch 29 is an electrical equipment switch, in general, each switch 29 is not used unless the power source such as an ignition power source and an accessory power source is in the on-state. In other words, the vehicle occupant is not required to visually recognize the position or function of the switches 29 during the off-state of the power source that is not intended (i.e., not expected) to use the switches 29. Thus, when the power source is in the off-state, the predetermined designs 17 are not displayed on the front side of the surface member 3 and the vehicle occupant cannot visually recognize the location or function of any switch 29. This configuration reduces complication to be experienced by the vehicle occupant due to the visibility of many switches.

On the other hand, when using the switches 29, the vehicle occupant can recognize the locations and/or functions of the respective switches 29 from the predetermined designs 17 displayed on the front side of the surface member 3. Hence, the vehicle occupant can reliably operate the switches 29 at an appropriate time.

Returning to Fig. 1, the switch device 1 preferably includes an elastic back member 19 that is disposed between the surface member 3 and the main body 15 and is colored to block light from the light sources 9. The back member 19 is preferably formed by physically removing a region corresponding to the shape of each predetermined design 17 to be displayed on the surface 3a of the front side of the surface member 3 or by removing light-blocking coloration in this region such that the back member 19 passes light to display the predetermined designs 17. In other words, the back member 19 preferably has a light-passing portion 36 that conforms to the shape of each predetermined design 17 and passes light from the light sources 9. The light-passing portion 36 is a through hole when being provided by physically removing part of the back member 19.

Specifically, when the switch device 1 includes the back member 19, the resin member 5 can be configured as a transparent resin member that is entirely transparent and allows light to pass through. In the aspect of Fig. 1, the light-passing portions 36 include seven light-passing portions 36a to 36g, each of which has the shape of a symbol or illustration. The light emitted from the light sources 9 passes through the plate portion 27 of each of the resin members 5 and reaches the back member 19. At this time, the light passes through the light-passing portions 36 (36a to 36g) of the back member 19, and thereby, the predetermined designs 17 are made visible, i.e., displayed on the front side of the surface member 3. In other words, the predetermined designs 17 are projected onto the front side of surface member 3 by the light having passed through the light-passing portions 36 (36a to 36g). On the other hand, the back member 19 blocks the light except where the light-passing portions 36 are provided. This allows the predetermined designs 17 to be clearly displayed on the front side of the surface member 3.

The back member 19 has a shape that substantially conforms to the shape of the resin member 5 constituting the upper side of the main body 15. In other words, the back member 19 has a shape that also conforms to the shape of the surface member 3.

It is preferred that the surface member 3 be made of woven fabric and the back member 19 be made of non-woven fabric.

Specifically, of many types of fabric, woven fabric can be preferably applied to the material of the surface member 3. The woven fabric has a regular weave pattern, i.e., yarns are woven together in a regular pattern. Appropriate adjustment of the weave pattern allows light to more easily pass through between the yarns. Thus, using the woven fabric as the material enables production of the surface member 3 that has not only excellent elasticity but also excellent optical transparency.

The back member 19 can be suitably made of non-woven fabric with a light-blocking color (e.g., black). In the non-woven fabric, fibers are randomly intertwined. Thus, even if the non-woven fabric to be used is relatively thin, the non-woven fabric does not have any gaps through which light can pass, and thus, the non-woven fabric effectively blocks light. Hence, using the non-woven fabric as the material allows production of the back member 19 that has not only excellent elasticity but also excellent light-blocking properties.

Accordingly, the predetermined designs 17 can be displayed more clearly on the front side of the surface member 3 by combining both the surface member 3 made of the woven fabric with excellent optical transparency and the back member 19 made of the non-woven fabric with excellent light-blocking properties.

When the switch device 1 includes the back member 19, line thickness of the light-passing portion 36 of the back member 19 is preferably thinner than a nominal value of line thickness of each predetermined design 17 to be displayed on the surface 3a of the front side of the surface member 3.

Specifically, the light emitted from the light sources 9 is diffused in the course of passing through the switches 29, the back member 19, and the surface member 3 in sequence. In other words, the light-passing portion 36 provided on the back member 19 becomes thicker in line thickness when being projected onto the front side of the surface member 3. Thus, each predetermined design 17 to be displayed on the front side of the surface member 3 can be made into a desired shape by reducing the line thickness of the light-passing portion 36 provided on the back member 19 with respect to the nominal value of the line thickness of each predetermined design 17 to be displayed on the front side of the surface member 3.

Desirably, the larger the area (i.e., square measure) of the light-passing portion 36 is, the smaller the light-passing portion 36 is. Satisfying this condition adjusts the balance of the predetermined designs 17 to be displayed on the front side of the surface member 3. For example, in the light-passing portion 36, the letters and/or symbols are configured to be larger in horizontal and vertical lengths than figures that are large in area. In such a configuration, when the light emitted from the light sources 9 passes through the surface member 3, the horizontal and vertical lengths of the figure to be displayed on the front side of the surface member 3 can be made approximately equal to the horizontal and vertical lengths of the letters and/or symbols.

Returning to Fig. 3, when the switch device 1 includes the back member 19, it is preferred that: the surface member 3 be waterproof; and the switch device 1 include an optically transparent adhesion layer 37 disposed between both the surface member 3 and the back member 19 for bonding both. Under such a configuration, even if water is splashed on the surface member 3 or the vehicle occupant operates the switches 29 from the front side of the surface member 3 with his/her wet finger, water does not penetrate below the adhesion layer 37. Hence, when the switch device 1 is energized, a short circuit due to water is impossible, and thus, there is no risk of water damage to the electronic components. In other words, the switch device 1 can maintain its functionality as a switch.

The waterproof property of the surface member 3 can be achieved by applying a water-repellent coating to the front side of the surface member 3, for example. The adhesion layer 37 is also water-resistant and watertight.

As shown in Fig. 3, when the switch device 1 includes the back member 19 and the adhesion layer 37, it is preferred that the surface member 3, the adhesion layer 37, and the back member 19 be integrated as a multilayer structure 39.

Specifically, the adhesion layer 37 is derived from an adhesive film. Under the state where this film is sandwiched between the sheet-shaped surface member 3 and the back member 19 before molding, this film is heated while pressure is applied to the surface member 3, this film, and the back member 19. This process allows the surface member 3, the film, and the back member 19 to be integrated into the multilayer structure 39. At this time, the film becomes the adhesion layer 37. The adhesion between the surface member 3 and the back member 19 via the adhesion layer 37 is improved by integrating the surface member 3, the adhesion layer 37, and the back member 19 into the multilayer structure 39. Such a multilayer structure 39 effectively reduces the number of components required to assemble the switch device 1, and this improves manufacturability.

It is preferred that the resin member 5 be integrally molded into the multilayer structure 39. In other words, the main body 15 preferably includes the resin member 5 that is integrally molded into the multilayer structure 39 and disposed on the back side of the back member 19.

Specifically, insert molding is performed in the following manner. The multilayer structure 39 is placed in advance at a predetermined position in a mold for molding the resin member 5. Further, resin is injected under the state where the mold is closed, and thereby, the resin member 5 is molded integrally into the multilayer structure 39. This production method improves the adhesion between the multilayer structure 39 and the resin member 5. In addition, integrating the resin member 5 into the multilayer structure 39 makes it easier to assemble the switch device 1 and can further improve manufacturability.

The switch device 1 is preferably included in an audio device provided in an instrument panel of the vehicle or in the decoration of the vehicle interior except the audio device. The decoration of the vehicle interior except the audio device is, for example, a car navigation system, an air conditioner, an electric seat adjuster, an electric window adjuster, an electric door mirror adjuster, or a driving assistance system.

Specifically, these in-vehicle devices including the audio device is not used unless the power source, such as an ignition power source and an accessory power source, is in the on-state. In other words, it is not a problem for the vehicle occupant even if the predetermined designs 17 are not displayed on the surface member 3 during the off-state period of the power source. Thus, when the power source is in the off-state, the predetermined designs 17 are hidden in the surface member 3 to prevent the vehicle occupant from feeling complicated by many switches of the in-vehicle devices.

Contrastively, for example, while the vehicle is being driven, the power source is in the on-state and the predetermined designs 17 are displayed in the surface member 3. Thus, the vehicle occupant can operate the audio device with confidence through the switch device 1, which provides a physical sense of operation even while driving the vehicle, for example.

It is more preferred that the switch device 1 be included in the audio device provided on the instrument panel of the vehicle. The audio device usually has a relatively large number of switches. The instrument panel where the audio device is disposed is a place where the vehicle occupant can easily see. Thus, the designability of the vehicle interior can be improved more effectively by applying the switch device 1 to the audio device.

As described above, the vehicle switch device 1 according to the present embodiment includes at least one switch 29 that is covered with the surface member 3 without visibly appearing in the front side of the surface member 3. In the state where each light source 9 is energized, each predetermined design 17 is displayed on the front side of the surface member 3 so as to indicate the operating position of each switch 29. Thus, each switch 29 enables the vehicle occupant having visually recognized each switch 29 to operate each switch 29 in a timely manner. Moreover, the surface member 3 is elastic and each switch 29 is a push-type switch. Hence, every switch 29 provides the vehicle occupant with a comfortable click feeling that is not hindered by the surface member 3. Consequently, the vehicle switch device 1 can have excellent functionality as a switch.

Under the state where every light source 9 is de-energized, every switch 29 is hidden in the back side of the surface member 3, so the vehicle occupant cannot visually recognize the size, shape, or position of every switch 29. Moreover, the surface member 3 is usually colored and/or patterned in accordance with the decoration of the vehicle interior, and every switch 29 does not visibly appear in the front side of the surface member 3. Thus, every switch 29 blends in with the decoration of the vehicle interior so as to improve designability without causing the vehicle occupant to feel complicated by having to see each switch 29. Hence, the vehicle switch device 1 can have excellent designability in the vehicle interior.

In addition, at least one switch 29 of the vehicle switch device 1 according to the present embodiment includes at least one first switch 33 having the surface 33a located highest of at least one switch 29. In the off-state before the first switch 33 is pressed in, the surface member 3 continuously covers the surface 33a of the first switch 33 and the surface 16a of the first portion 16 and is maintained at a height equal to or higher than the surface 33a of the first switch 33 between the first switch 33 and the first portion 16, wherein the first portion 16 is part of the main body 15 and is located at a height equal to or higher than the surface 33a of the first switch 33. Since the positional relationship between the first switch 33, the main body 15, and the surface member 3 is specifically defined in this manner, the vehicle switch device 1 can reliably cause the surface member 3 to cover the first switch(es) 33 and the switch(es) 29 without making both visually appear in the front side of the surface member 3.

Further, at least one switch 29 of the vehicle switch device 1 according to the present embodiment includes: at least one first switch 33 having the surface 33a located at the highest position of at least one switch 29; and at least one second switch 35 having the surface 35a that is located at a height equal to or lower than the surface 33a of at least one first switch 33. In the off-state before the first and second switches 33 and 35 are pressed in, the surface member 3 continuously covers both the first and second switches 33 and 35 and is maintained at a height equal to or higher than the surface 35a of the second switch 35 between the first and second switches 33 and 35. Since the positional relationship between the first switch 33, the second switch 35, and the surface member 3 is specifically defined in this manner, the vehicle switch device 1 can reliably cause the surface member 3 to cover both the first and second switches 33 and 35 and the switches 29 without making them visually appear in the front side of the surface member 3.

Moreover, at least one switch 29 of the vehicle switch device 1 according to the present embodiment includes at least one first switch 33 having the surface 33a located highest of at least one switch 29. In the off-state before each first switch 33 is pressed in, each first switch 33 is located at a height equal to or lower than the surface 15a of the main body 15. In the off-state of each first switch 33, the surface member 3 continuously covers both the surface 33a of the first switch 33 and the surface 15a of the main body 15 at the height of the surface 15a of the main body 15. Since the positional relationship between the first switch(es) 33, the main body 15, and the surface member 3 is specifically defined in this manner, the vehicle switch device 1 can reliably cause the surface member 3 to cover the first switch(es) 33 and the switch(es) 29 without making them visually appear in the front side of the surface member 3.

In addition, the vehicle switch device 1 according to the present embodiment includes: at least one switch 29 that is an electrical equipment switch and is to be used during the on-state of the power source; and at least one light source 9 to be energized during the off-state of the power source. Thus, during the off-state of the power source that is not intended to use any switch 29, the vehicle switch device 1 does not display the predetermined designs 17 on the front side of the surface member 3, and thereby can reduce the sense of complication that the vehicle occupant feels at the time of seeing many switches.

Moreover, the vehicle switch device 1 displays the predetermined designs 17 on the front side of the surface member 3 during the on-state of the power source that is intended to use the switches 29, and this configuration enables the vehicle occupant to reliably operate the switches 29. Hence, the vehicle switch device 1 can further improve its functionality as a switch and its designability in the vehicle interior.

Furthermore, the vehicle switch device 1 according to the present embodiment includes the elastic back member 19 that is disposed between the surface member 3 and the main body 15 and is subjected to coloration for blocking light from the light source(s) 9. The back member 19 is formed by physically removing a region corresponding to the shape of each predetermined design 17 to be displayed on the surface 3a of the front side of the surface member 3 or by removing coloration in this region such that the back member 19 passes light to display the predetermined design(s) 17. The back member 19 blocks light except the light-passing portion 36, which is the portion configured to allow light to pass through. Hence, the vehicle switch device 1 can clearly display the predetermined design(s) 17 on the front side of the surface member 3. Since the back member 19 is elastic, the vehicle switch device 1 does not impair clicking feeling when the vehicle occupant presses in the switch(es) 29 from the front side of the surface member 3. Thus, the vehicle switch device 1 can have excellent functionality as a switch.

In addition, the back member 19 can readily change the shape of the light-passing portion 36. Accordingly, the vehicle switch device 1 can readily change the predetermined design(s) 17 to be displayed on the front side of the surface member 3 so as to enhance general versatility.

Further, the vehicle switch device 1 according to the present embodiment includes the surface member 3 made of woven fabric and the back member 19 made of non-woven fabric. The woven fabric has a regular weave pattern. Appropriate adjustment of the weave pattern allows light to easily pass through between the yarns. Thus, the woven fabric can constitute the surface member 3 that has both excellent elasticity and excellent optical transparency.

In the non-woven fabric, fibers are irregularly entangled with each other. Hence, even if the non-woven fabric is relatively thin, it has no gaps through which light can pass, and thus, light is effectively blocked. Accordingly, in the case of using the non-woven fabric as the material, the back member 19 can be formed with excellent elasticity as well as excellent light blocking properties. Hence, the vehicle switch device 1 can more clearly display the predetermined design(s) 17 on the front side of the surface member 3 by combining both the surface member 3 made of the woven fabric with excellent optical transparency and the back member 19 made of the non-woven fabric with excellent light blocking properties.

In the vehicle switch device 1 according to the present embodiment, the line thickness of the light-passing portion 36 configured as part of the back member 19 and configured to allow light to pass through is thinner than the nominal value of the line thickness of each predetermined design 17 to be displayed on the front side of the surface member 3. Thus, the vehicle switch device 1 can ensure desired shape(s) of the predetermined design(s) 17 by preventing the line(s) of the predetermined design(s) 17 from becoming excessively thick due to light diffusion.

In addition, the vehicle switch device 1 according to the present embodiment includes: the waterproof surface member 3; and the adhesion layer 37 that has optical transparency and is disposed between both the surface member 3 and the back member 19 for bonding both. The surface member 3 and the adhesion layer 37 prevent water from entering the back member 19 and entering below the back member 19. As a result, the vehicle switch device 1 can protect electronic components from short circuits to be caused by water when powered on, and thus can maintain its functionality as a switch.

In the vehicle switch device 1 according to the present embodiment, the surface member 3, the adhesion layer 37, and the back member 19 are integrated into the multilayer structure 39. Thus, the vehicle switch device 1 can improve the adhesion between the surface member 3 and the back member 19 via the adhesion layer 37, and can also reduce the number of components required for assembly so as to improve manufacturability.

Moreover, the vehicle switch device 1 according to the present embodiment includes the main body 15 having the resin member 5, which is integrally molded into the multilayer structure 39 and disposed on the back side of the back member 19. Hence, the vehicle switch device 1 can improve the adhesion between the multilayer structure 39 and the resin member 5, and can further reduce the number of components required for assembly so as to further improve manufacturability.

Furthermore, the vehicle switch device 1 according to the present embodiment is used for an audio device installed in the instrument panel of the vehicle or for the decoration of the vehicle interior except the audio device. Thus, the vehicle switch device 1 can provide in-vehicle devices in the vehicle interior with both excellent operability with clicking feeling and excellent designability that harmonizes with the decoration of the vehicle interior.

Therefore, the vehicle switch device 1 according to the embodiment has not only excellent functionality as a switch but also excellent designability in a vehicle.

Returning to Fig. 4, in the description of the vehicle switch device 1 according to the present embodiment, it is assumed that predetermined designs 17 are illuminated by the light emitted from the light sources 9 onto the surface 3a of the surface member 3 when electricity is applied. Not limited to such a configuration, the vehicle switch device 1 may be configured as follows. In the surface 3a of the surface member 3 when electricity is applied in the vehicle switch device 1, the regions other than the predetermined designs 17 are illuminated by the light emitted from the light sources 9 so as to allow the vehicle occupant to recognize the positions of the predetermined designs 17, i.e., the operating positions of the respective switches 29. In this configuration, the light from the light sources 9 is not transmitted through the regions of the predetermined designs 17.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1: vehicle switch device (switch device)
- 3: surface member
- 3a: front side
- 5: resin member
- 7: switch element
- 9: light source
- 11: substrate
- 13: casing
- 13a: hook portion
- 13b: fitting margin
- 15: main body
- 15a: surface
- 16: first portion
- 16a: surface
- 17, 17c, 17d, 17e: predetermined design
- 19: back member
- 21: bottom portion
- 23: protruding portion
- 23a: surface
- 25a: first slit
- 25b: second slit
- 27: plate portion
- 27a: fixed end
- 27b: protrusion
- 29: switch
- 31: button member
- 32, 32a: transparent portion
- 33: first switch
- 33a: surface
- 35: second switch
- 35a: surface
- 36, 36a, 36b, 36c, 36d, 36e, 36f, 36g: light-passing portion
- 37: adhesion layer
- 39: multilayer structure

## Claims

1. A vehicle switch device (1) comprising:
a surface member (3) that is colored and/or patterned and has elasticity and optical transparency from a back side to a front side, the front side being exposed to a vehicle interior, the back side being unexposed to the vehicle interior;
at least one push-type switch (29) that includes a button member (31) having light-transparency and can operate the button member (31) from the front side of the surface member (3), the button member (31) being disposed on the back side of the surface member (3) and being covered with and hidden by the surface member (3); and
at least one light source (9) that indicates an operating position of the at least one switch (29) by emitting light from the back side of the button member (31) and displaying a predetermined design (17) on the surface member (3) in an energized state and causes the surface member (3) to hide the operating position by stopping light emission in a de-energized state; and
a main body (15) that accommodates at least part of each of the at least one switch (29) and the at least one light source (9),
wherein the at least one switch (29) is covered with the surface member (3) without visibly appearing from the front side of the surface member (3).

2. The vehicle switch device (1) according to claim 1, wherein:
the at least one switch (29) includes at least one first switch (33) having a surface (33a) that is located highest of the at least one switch (29); and
in an off-state before the at least one first switch (33) is pressed in, the surface member (3) continuously covers both the surface (33a) of the at least one first switch (33) and a surface (16a) of a first portion (16) and is maintained at a height equal to or higher than the surface (33a) of the at least one first switch (33) between the at least one first switch (33) and the first portion (16),
the first portion (16) being a portion of the main body (15) and is located at a height equal to or higher than the surface (33a) of the at least one first switch (33).

3. The vehicle switch device (1) according to claim 1 or 2, wherein:
the at least one switch (29) includes at least one first switch (33) and at least one second switch (35),
the at least one first switch (33) having a surface (33a) located highest of the at least one switch (29),
the at least one second switch (35) having a surface (35a) located at a height equal to or lower than the surface (33a) of the at least one first switch (33); and
in an off-state before the at least one first switch (33) and the at least one second switch (35) are pressed in, the surface member (3) continuously covers both the at least one first switch (33) and the at least one second switch (35) and is maintained at a height equal to or higher than the surface (35a) of the at least one second switch (35) between the at least one first switch (33) and the at least one second switch (35).

4. The vehicle switch device (1) according to any one of claims 1 to 3, wherein:
the at least one switch (29) includes at least one first switch (33) having a surface (33a) that is located highest of the at least one switch (29);
the at least one first switch (33) is located at a height equal to or lower than a surface (15a) of the main body (15) in an off-state before the at least one first switch (29) is pressed in; and
the surface member (3) continuously covers the surface (33a) of the at least one first switch (33) and the surface (15a) of the main body (15) at a height of the surface (15a) of the main body (15) in the off-state of the at least one first switch (33).

5. The vehicle switch device (1) according to any one of claims 1 to 4, wherein:
the at least one switch (29) is an electrical equipment switch and is used when a power source is in an on-state; and
the at least one light source (9) is energized when the power source is in the on-state.

6. The vehicle switch device (1) according to any one of claims 1 to 5, further comprising a back member (19) that has elasticity and is disposed between the surface member (3) and the main body (15) and subjected to coloration for blocking light emitted from the at least one light source (9),
wherein the back member (19) is formed by physically removing a region corresponding to a shape of the predetermined design (17) to be displayed on the surface member (3) or by removing coloration of the region in such a manner that the back member (19) passes light to display the predetermined design (17).

7. The vehicle switch device (1) according to claim 6, wherein:
the surface member (3) is made of woven fabric; and
the back member (19) is made of non-woven fabric.

8. The vehicle switch device (1) according to claim 6 or 7, wherein line thickness of a light-passing portion (36) of the back member (19) is thinner than a nominal value of line thickness of the predetermined design (17) to be displayed on the front side of the surface member (3), the light-passing portion (36) being a portion through which light passes.

9. The vehicle switch device (1) according to any one of claims 6 to 8, further comprising an adhesion layer (37) between the surface member (3) and the back member (19), wherein:
the surface member (3) is waterproof; and
the adhesion layer (37) has optical transparency and bonds the surface member (3) and the back member (19).

10. The vehicle switch device (1) according to claim 9, wherein the surface member (3), the adhesion layer (37), and the back member (19) are integrated into a multilayer structure (39).

11. The vehicle switch device (1) according to claim 10, wherein the main body (15) is an assembly of a plurality of components and includes a resin member (5) that is integrally molded into the multilayer structure (39) and disposed on a back side of the back member (19).

12. The vehicle switch device (1) according to any one of claims 1 to 11 be included in an audio device that is installed in an instrument panel
